# EUROPEAN PATENT APPLICATION

(11) **EP 4 797 778 A1**
(43) Date of publication of application: **26.08.2026**
(21) Application number: 24887478.6
(22) Date of filing: 24.07.2024
(51) Int. Cl.: H04W 24/08

(54) **SENSING MEASUREMENT METHOD AND APPARATUS**

(30) Priority: 09.11.2023 CN 202311503112
(71) Applicant: HUAWEI TECHNOLOGIES CO., LTD., Shenzhen 518129 (CN)
(72) Inventor: PENG, Xiaohui, Shenzhen, Guangdong 518129 (CN); LUO, Jiajin, Shenzhen, Guangdong 518129 (CN); ZHOU, Baojian, Shenzhen, Guangdong 518129 (CN); YU, Yang, Shenzhen, Guangdong 518129 (CN); YAN, Min, Shenzhen, Guangdong 518129 (CN)
(74) Representative: Pfenning, Meinig & Partner mbB
(86) International application number: PCT/CN2024/107311
(87) International publication number: WO 2025/097855

(57) **Abstract**

A sensing measurement method and an apparatus are provided, relating to the field of communication technologies, can provide a clear sparse sensing signal pattern, to reduce computational complexity while reducing frequency domain resources occupied by sensing signals, thereby implementing efficient allocation of frequency domain resources and improving communication performance. The method includes: determining M frequencies, where a sum of phases corresponding to a plurality of frequencies among the M frequencies modulo 2π equals 0; sending frequency information of the M frequencies to a receiver device; and sending a sensing signal to a target object through the M frequencies.

## Description

This application claims priority to Chinese Patent Application No. 202311503112.4, filed with the China National Intellectual Property Administration on November 9, 2023 and entitled "SENSING MEASUREMENT METHOD AND APPARATUS", which is incorporated herein by reference in its entirety.

### TECHNICAL FIELD

Embodiments of this application relate to the field of communication technologies, and in particular, to a sensing measurement method and an apparatus.

### BACKGROUND

In communication systems, sensing measurement may be performed on a surrounding environment and a target by using sensing signals. In sensing applications, to ensure ranging accuracy, a wider ranging distance requires denser sensing signals in frequency domain. However, the increase in density of sensing signals causes growing occupation in frequency domain resources, affecting communication performance.

In view of this, it is proposed to use sparse sensing signals for sensing measurement. Distribution of sparse sensing signals in frequency domain may be determined based on a ranging distance and a ranging resolution of sensing, to implement efficient allocation of frequency domain resources while ensuring ranging accuracy and the ranging resolution.

However, searching, based on the ranging distance and the ranging resolution of sensing, for a distribution pattern of sparse sensing signals that minimizes frequency domain resource overheads incur high computational complexity. Especially when a bandwidth of sensing signals is large, solving an optimal pattern is a non-deterministic polynomial hard problem (NP-hard problem), and there may be non-unique solutions. As a result, the optimal sparse sensing signal pattern cannot be determined.

### SUMMARY

This application provides a sensing measurement method and an apparatus, to provide a clear sparse sensing signal pattern, so as to reduce computational complexity while reducing frequency domain resources occupied by sensing signals, thereby implementing efficient allocation of frequency domain resources and improving communication performance.

According to a first aspect, this application provides a sensing measurement method. The method may be performed by a transmitter device. Unless otherwise specified, the "transmitter device" in this application may be a transmitter device itself, or may be a component (such as, a processor, a chip, or a chip system) in the transmitter device, or may be a logic module or software that can implement all or some functions of the transmitter device. The method includes: determining M frequencies, where a sum of phases corresponding to a plurality of frequencies among the M frequencies modulo 2π equals 0; sending frequency information of the M frequencies to a receiver device; and sending a sensing signal to a target object through the M frequencies.

According to the first aspect, a sum of phases corresponding to a plurality of frequencies among the M frequencies that are determined by the transmitter device for sensing modulo 2π equals 0. This can ensure a higher ranging resolution without ambiguity in ranging. In addition, the M frequencies may be non-uniformly distributed in frequency domain, so that frequency domain resources occupied by the sensing signal can be reduced, thereby reducing frequency domain resource overheads. Further, in this embodiment of this application, a clear sparse sensing signal pattern (that is, a distribution pattern of the M frequencies) can be provided, to reduce computational complexity while reducing frequency domain resources occupied by the sensing signal, thereby implementing efficient allocation of frequency domain resources, and improving communication performance.

According to a second aspect, an embodiment of this application provides a sensing measurement method. The method may be performed by a receiver device. Unless otherwise specified, the "receive end device" in this application may be a receiver device itself, or may be a component (such as, a processor, a chip, or a chip system) in the receiver device, or may be a logic module or software that can implement all or some functions of the receiver device. The method includes: receiving frequency information of M frequencies from a transmitter device, where a sum of phases corresponding to a plurality of frequencies among the M frequencies modulo 2π equals 0; receiving a sensing signal through the M frequencies; and performing sensing measurement based on the sensing signal to obtain a sensing measurement result.

According to the second aspect, a sum of phases corresponding to a plurality of frequencies among the M frequencies that are used by the receiver device for sensing modulo 2π equals 0. This can ensure a higher ranging resolution without ambiguity in ranging. In addition, the M frequencies may be non-uniformly distributed in frequency domain, so that frequency domain resources occupied by the sensing signal can be reduced, thereby reducing frequency domain resource overheads. Further, in this embodiment of this application, a clear sparse sensing signal pattern (that is, a distribution pattern of the M frequencies) can be provided, to reduce computational complexity while reducing frequency domain resources occupied by the sensing signal, thereby implementing efficient allocation of frequency domain resources, and improving communication performance.

According to the first aspect and the second aspect, in a possible design, the M frequencies include at least one group of frequencies, each group of frequencies among the at least one group of frequencies includes a plurality of frequencies, and a sum of phases corresponding to the frequencies in each group modulo 2π equals 0.

Based on this possible design, at least one group of frequencies is provided, in which a sum of phases corresponding to the frequencies in the at least one group of frequencies modulo 2π equals 0, to provide a feasible solution for frequency selection.

According to the first aspect and the second aspect, in a possible design, the M frequencies include K groups of frequencies, each group of frequencies among the K groups of frequencies includes 2ⁿ⁺¹ frequencies, a sum of phases corresponding to the 2ⁿ⁺¹ frequencies modulo 2π equals 0, K is greater than or equal to 1, and n is an integer.

According to the first aspect and the second aspect, in a possible design, a phase difference between phases corresponding to two adjacent frequencies in the plurality of frequencies arranged in ascending order among the M frequencies is π/2ⁿ, where n is an integer.

Based on this possible design, the phase difference between the phases corresponding to two adjacent frequencies is π/2ⁿ. As a result, phases corresponding to the plurality of frequencies are summed to achieve pairwise cancellation. This achieves optimal observation performance by selecting a small quantity of frequency resources, thereby implementing efficient allocation of frequency domain resources, and improving communication performance.

According to the first aspect and the second aspect, in a possible design, the M frequencies include at least one group of frequencies, each group of frequencies among the at least one group of frequencies includes a plurality of frequencies, a phase difference between phases corresponding to two adjacent frequencies in each group of frequencies arranged in ascending order is π/2ⁿ, and n is an integer.

Based on this possible design, at least one group of frequencies is provided, in which a phase difference between phases corresponding to two adjacent frequencies in each group of frequencies is π/2ⁿ, to provide a feasible solution for frequency selection.

According to the first aspect and the second aspect, in a possible design, the M frequencies include K groups of frequencies, each group of frequencies among the K groups of frequencies includes 2ⁿ⁺¹ frequencies, a phase difference between phases corresponding to two adjacent frequencies among the 2ⁿ⁺¹ frequencies arranged in ascending order is π/2ⁿ, and n is an integer.

According to the first aspect and the second aspect, in a possible design, the phase corresponding to the frequency is an integer multiple of 2πΔfΔτ, where Δf represents an integer multiple of a subcarrier spacing, and Δτ is determined based on a highest frequency and a lowest frequency among the M frequencies.

Based on this possible design, a proper phase may be selected according to the foregoing formula, to determine a proper frequency, to provide a feasible solution for frequency selection.

According to the first aspect and the second aspect, in a possible design, the frequency and the phase corresponding to the frequency satisfy the following formula: *f* = (*θ* - *ϕ*)/2*π*Δ*τ*, where *f* represents the frequency, *θ* represents the phase corresponding to the frequency, *ϕ* is determined according to an injective function, and Δτ is determined based on the highest frequency and the lowest frequency among the M frequencies.

According to the first aspect and the second aspect, in a possible design, frequencies in a same group correspond to the same *ϕ*, and frequencies in different groups correspond to different *ϕ*.

Based on the foregoing two possible designs, a frequency corresponding to a phase may be determined according to the foregoing formula, to provide a feasible solution for frequency selection.

According to the first aspect and the second aspect, in a possible design, the M frequencies include M/2 groups of frequencies, each group of frequencies includes two frequencies, and a phase difference between phases corresponding to two adjacent frequencies in the two frequencies is π.

According to the first aspect and the second aspect, in a possible design, the M frequencies include M/4 groups of frequencies, each group of frequencies includes four frequencies, and a phase difference between phases corresponding to two adjacent frequencies among the four frequencies arranged in ascending order is π/2.

According to the first aspect and the second aspect, in a possible design, the M frequencies include M/8 groups of frequencies, each group of frequencies includes eight frequencies, and a phase difference between phases corresponding to two adjacent frequencies among the eight frequencies arranged in ascending order is π/4.

Based on the foregoing three possible designs, three feasible solutions are provided for frequency selection.

According to the first aspect and the second aspect, in a possible design, the frequency information of the frequency includes a frequency value of the frequency; or the frequency information of the frequency includes an index value of the frequency.

According to a third aspect, an embodiment of this application provides a communication apparatus. The communication apparatus may be used in the transmitter device in the first aspect, to implement a function performed by the transmitter device. The communication apparatus may be a transmitter device, or may be a chip, a chip system, a system on chip, or the like of the transmitter device. The communication apparatus may perform, by hardware or by hardware executing corresponding software, the function performed by the transmitter device. The hardware or the software includes one or more modules corresponding to the foregoing function, for example, a transceiver module and a processing module. The transceiver module may independently complete the following sending and receiving operations, or may cooperate with the processing module to complete the following sending and receiving operations. Correspondingly, the processing module may independently complete the following processing operation, or may cooperate with the transceiver module to complete the following processing operation. This is not limited.

For example, the processing module is configured to determine M frequencies, where a sum of phases corresponding to a plurality of frequencies among the M frequencies modulo 2π equals 0. The transceiver module is configured to send frequency information of the M frequencies to a receiver device, and is further configured to send a sensing signal to a target object through the M frequencies.

Optionally, the transceiver module and the processing module of the communication apparatus in the third aspect may further perform corresponding functions in the first aspect or any possible design of the first aspect. For details, refer to the detailed descriptions in the method examples. For beneficial effects that can be achieved, refer to the foregoing related content.

According to a fourth aspect, an embodiment of this application provides a communication apparatus. The communication apparatus may be used in the receiver device in the second aspect, to implement a function performed by the receiver device. The communication apparatus may be a receiver device, or may be a chip, a chip system, a system on chip, or the like of the receiver device. The communication apparatus may perform, by hardware or by hardware executing corresponding software, the function performed by the receiver device. The hardware or the software includes one or more modules corresponding to the foregoing function, for example, a transceiver module and a processing module. The transceiver module may independently complete the following sending and receiving operations, or may cooperate with the processing module to complete the following sending and receiving operations. Correspondingly, the processing module may independently complete the following processing operation, or may cooperate with the transceiver module to complete the following processing operation. This is not limited.

For example, the transceiver module is configured to receive frequency information of M frequencies from the transmitter device, where a sum of phases corresponding to a plurality of frequencies among the M frequencies modulo 2π equals 0; the transceiver module is further configured to receive a sensing signal through the M frequencies; and the processing module is configured to perform sensing measurement based on the sensing signal to obtain a sensing measurement result.

Optionally, the transceiver module and the processing module of the communication apparatus in the fourth aspect may further perform corresponding functions in the second aspect or any possible design of the second aspect. For details, refer to the detailed descriptions in the method examples. For beneficial effects that can be achieved, refer to the foregoing related content.

According to a fifth aspect, an embodiment of this application provides a communication apparatus. The communication apparatus includes one or more processors. The one or more processors are configured to run a computer program or instructions. When the one or more processors execute computer instructions or the instructions, the sensing measurement method according to any one of the first aspect and the second aspect is performed.

In a possible design, the communication apparatus further includes one or more memories, the one or more memories are coupled to the one or more processors, and the one or more memories are configured to store the foregoing computer program or instructions. In a possible implementation, the memory is located outside the communication apparatus. In another possible implementation, the memory is located inside the communication apparatus. In this embodiment of this application, the processor and the memory may alternatively be integrated into one device. In other words, the processor and the memory may alternatively be integrated together. In a possible implementation, the communication apparatus further includes a transceiver. The transceiver is configured to receive information and/or send information.

In a possible design, the communication apparatus further includes one or more communication interfaces, the one or more communication interfaces are coupled to the one or more processors, and the one or more communication interfaces are configured to communicate with a module other than the communication apparatus.

According to a sixth aspect, an embodiment of this application provides a communication apparatus. The communication apparatus includes an interface circuit and a logic circuit. The interface circuit is configured to input and/or output information. The logic circuit is configured to perform the sensing measurement method according to any one of the first aspect or the second aspect, and perform processing and/or generate information based on the information.

According to a seventh aspect, an embodiment of this application provides a computer-readable storage medium. The computer-readable storage medium stores computer instructions or a program. When the computer instructions or the program is run on a computer, the sensing measurement method according to any one of the first aspect or the second aspect is performed.

According to an eighth aspect, an embodiment of this application provides a computer program product including computer instructions. When the computer program product is run on a computer, the sensing measurement method according to any one of the first aspect or the second aspect is performed.

According to a ninth aspect, an embodiment of this application provides a computer program. When the computer program is run on a computer, the sensing measurement method according to any one of the first aspect or the second aspect is performed.

According to a tenth aspect, an embodiment of this application provides a chip, including a processor. The processor is coupled to a memory, the memory is configured to store a program or instructions, and when the program or the instructions are executed by the processor, the sensing measurement method according to any one of the first aspect or the second aspect is performed.

For technical effects brought by any design of the fifth aspect to the tenth aspect, refer to the technical effects brought by any one of the first aspect or the second aspect. Details are not described again.

According to an eleventh aspect, an embodiment of this application provides a communication system. The communication system may include the communication apparatus configured to perform the first aspect or any possible design of the first aspect, or may include the communication apparatus configured to perform the second aspect or any possible design of the second aspect.

### BRIEF DESCRIPTION OF DRAWINGS

FIG. 1 is a diagram of a communication system according to an embodiment of this application;
FIG. 2 is a diagram of a communication scenario according to an embodiment of this application;
FIG. 3 is a diagram of a communication scenario according to an embodiment of this application;
FIG. 4 is a diagram of a communication scenario according to an embodiment of this application;
FIG. 5 is a diagram of a communication scenario according to an embodiment of this application;
FIG. 6 is a diagram of a communication scenario according to an embodiment of this application;
FIG. 7 is a diagram of a communication scenario according to an embodiment of this application;
FIG. 8 is a diagram of a communication scenario according to an embodiment of this application;
FIG. 9 is a diagram of a communication apparatus according to an embodiment of this application;
FIG. 10 is a flowchart of a sensing measurement method according to an embodiment of this application;
FIG. 11 is a flowchart of a sensing measurement method according to an embodiment of this application;
FIG. 12 is a diagram of frequency phase cancellation according to an embodiment of this application;
FIG. 13 is a diagram of frequency phase cancellation according to an embodiment of this application;
FIG. 14 is a diagram of frequency phase cancellation according to an embodiment of this application;
FIG. 15 is a diagram of a transmitter device according to an embodiment of this application;
FIG. 16 is a diagram of a receiver device according to an embodiment of this application; and
FIG. 17 is a diagram of a communication apparatus according to an embodiment of this application.

### DESCRIPTION OF EMBODIMENTS

Before embodiments of this application are described, technical terms used in embodiments of this application are described.

Wireless sensing technology: In recent years, the wireless sensing technology has attracted wide attention from academia. In the wireless sensing technology, characteristics of signal propagation space (channel) are obtained by analyzing a change of a radio signal during propagation, to implement scenario sensing. The scenario herein includes a target position, a posture, an action, and the like, and further includes an external factor (such as a building or a moving vehicle).

For example, radars are a type of most classic wireless sensing means, widely used in the fields such as agriculture, meteorology, and transportation. A basic principle of the radar is that a transmitter device transmits a specific waveform signal, the signal is received by a receiver device via a radio channel, and then signal processing is performed on both the transmitted signal and the received signal, to extract an interested target in the radio channel.

Wireless communication system: A main function of the wireless communication system is to perform information exchange between a transmitter device and a receiver device. Similarly, a basic principle of the wireless communication system is that the transmitter device transmits a specific waveform signal, the signal is received by the receiver device via a radio channel, and the signal transmitted by the transmitter device is demodulated after signal processing. An entire physical process of emission, transmission, and reception of the radar is extremely similar to that of wireless communication. How to implement integration of wireless communication and sensing technologies (represented by radar) (that is, integrated sensing and communication), to sense a surrounding environment while implementing communication, becomes a hot topic in current research.

To implement the integrated sensing and communication, a sensing signal may be placed in frequency domain, and the surrounding environment and a target are sensed by using the sensing signal (or may be described as a frequency domain sensing signal, a sensing reference signal, a frequency domain sensing reference signal, or the like).

For example, in cellular and wireless fidelity (wireless fidelity, Wi-Fi) systems, to detect channel quality, a channel state information (channel state information, CSI) signal may be sent as a sensing signal to measure a channel. From the perspective of a physical process, the channel is actually affected by a surrounding environment. In a sense, channel measurement is a sensing manner.

For another example, in a long term evolution (long term evolution, LTE) system and a fifth generation (fifth generation, 5G) new radio (new radio, NR) communication system, a positioning reference signal (positioning reference signal, PRS) dedicated for positioning is used as a sensing signal for sensing measurement, and positioning performance is improved by designing a PRS signal.

In the 5G NR system and the Wi-Fi system, distribution of a sensing signal in frequency domain is usually uniform. During sensing application, to ensure no ambiguity in ranging, a constraint is imposed on a density of the sensing signal in frequency domain. A larger ranging distance indicates a higher density of the sensing signal in frequency domain. However, as the density of sensing signals increases, a larger quantity of frequency domain resources are occupied, affecting communication performance.

To overcome the problem that the sensing signal uniformly distributed in frequency domain occupies a large quantity of frequency domain resources, which affects communication performance, a sparse sensing signal design method is proposed. During wireless sensing application, a to-be-sensed target usually presents a characteristic of sparse distribution in space. Based on this, a sparse sensing signal may be used for sensing.

Distribution of the sparse sensing signal in frequency domain is set based on a ranging distance and a ranging resolution of sensing, to implement efficient allocation of frequency domain resources without ambiguity in distance or the ranging resolution.

Specifically, (1) a maximum bandwidth of the sensing signal is determined by the ranging resolution; (2) a minimum bandwidth of the sensing signal is determined by a maximum unambiguous ranging distance; and (3) full coverage of a bandwidth is ensured, that is, the bandwidth is k*bₘᵢₙ, where k∈{1,2, ...,K}, K=bₘₐₓ/bₘᵢₙ, and bₘₐₓ and bₘᵢₙ respectively represent the maximum bandwidth and the minimum bandwidth. (4) When the foregoing three conditions are met, frequency domain resources used are minimized, that is, frequency domain resource overheads are minimized.

However, computational complexity is high in searching, based on the ranging distance and the ranging resolution of sensing, for a distribution pattern of sparse sensing signals that minimizes frequency domain resource overheads. Especially when a bandwidth of sensing signals is large, solving an optimal pattern is a non-deterministic polynomial hard problem (NP-hard problem), and may yield non-unique solutions. As a result, the optimal sparse sensing signal pattern cannot be determined.

To resolve the foregoing technical problems, an embodiment of this application provides a sensing measurement method. In the method, a transmitter device may determine M frequencies, where a sum of phases corresponding to a plurality of frequencies among the M frequencies modulo 2π equals 0; frequency information of the M frequencies is sent to a receiver device; and a sensing signal is sent to a target object through the M frequencies.

In embodiments of this application, a sum of phases corresponding to a plurality of frequencies among the M frequencies that are determined by the transmitter device for sensing modulo 2π equals 0. This can ensure a higher ranging resolution without ambiguity in ranging. In addition, the M frequencies may be non-uniformly distributed in frequency domain, so that frequency domain resources occupied by the sensing signal can be reduced, thereby reducing frequency domain resource overheads. Further, in embodiments of this application, a clear sparse sensing signal pattern (that is, the distribution pattern of the M frequencies) can be provided, to reduce computational complexity while reducing frequency domain resources occupied by the sensing signal, thereby implementing efficient allocation of frequency domain resources, and improving communication performance.

The following describes implementations of embodiments of this application in detail with reference to the accompanying drawings in this specification.

The sensing measurement method provided in embodiments of this application may be applied to any communication system. The communication system may be a 3rd generation partnership project (third generation partnership project, 3GPP) communication system, for example, an LTE system, or may be a 5G mobile communication system, an LTE-5G hybrid networking system, an NR system, an NR vehicle to everything (vehicle to everything, V2X) system, a device-to-device (device-to-device, D2D) communication system, a machine-to-machine (machine-to-machine, M2M) communication system, Internet of Things (Internet of Things, IoT), a narrowband-Internet of Things (narrowband-Internet of Things, NB-IoT) system, a global system for mobile communications (global system for mobile communications, GSM), an enhanced data rate for GSM evolution (enhanced data rate for GSM evolution, EDGE) system, a wideband code division multiple access (wideband code division multiple access, WCDMA) system, a code division multiple access 2000 (code division multiple access, CDMA2000) system, a time division-synchronization code division multiple access (time division-synchronization code division multiple access, TD-SCDMA) system, enhanced mobile broadband (enhanced mobile broadband, eMBB), ultra-reliable and low-latency communication (ultra-reliable and low-latency communication, URLLC), enhanced machine-type communication (enhanced machine-type communication, eMTC), and various next-generation communication systems, for example, a 5.5G mobile communication system, a sixth generation (sixth generation, 6G) mobile communication system, or may be a non-terrestrial network (non-terrestrial network, NTN) system (for example, a satellite communication system), a non-3GPP communication system, or the like. This is not limited.

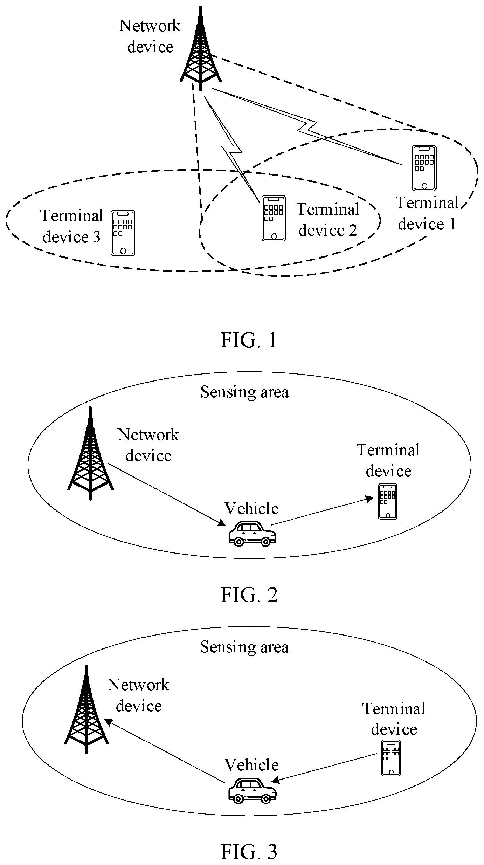

The following uses FIG. 1 as an example to describe the communication system provided in embodiments of this application.

FIG. 1 is a diagram of a communication system according to an embodiment of this application. As shown in FIG. 1, the communication system may include at least one terminal device and at least one network device.

In FIG. 1, the terminal device may be located in beam/cell coverage of the network device, and the network device may provide a communication service for the terminal device. For example, the network device may encode downlink data through channel coding, and transmit the downlink data to the terminal device through an air interface after constellation modulation (that is, the network device is a transmitter device, and the terminal device is a receiver device). Alternatively, the terminal device may encode uplink data through channel coding, and send the uplink data to the network device through an air interface after constellation modulation (that is, the terminal device is a transmitter device, and the network device is a receiver device). It may be understood that, when the network device communicates with the network device, or the terminal device communicates with the terminal device, communication may be performed through channel coding. In other words, both a transmitter device and a receiver device may be network devices, or both may be terminal devices. This is not limited.

The terminal device in FIG. 1 may be a device having a wireless transceiver function or a chip or a chip system that can be disposed in the device, can allow a user to access a network, and is a device configured to provide voice and/or data connectivity for the user. The terminal device may also be referred to as user equipment (user equipment, UE), a subscriber unit (subscriber unit), a terminal (terminal), a mobile station (mobile station, MS), a mobile terminal (mobile terminal, MT), or the like.

For example, the terminal device in FIG. 1 may be a mobile phone (mobile phone), a tablet computer, or a computer with a wireless transceiver function. Alternatively, the terminal device may be a subscriber station, a mobile station, a remote station, a remote terminal device, a mobile terminal device, a user terminal device, a wireless communication device, a user agent, a user apparatus, a cellular phone, a cordless phone, a session initiation protocol (session initiation protocol, SIP) phone, a wireless local loop (wireless local loop, WLL) station, a personal digital assistant (personal digital assistant, PDA), a tablet computer (PAD), a handheld device with a wireless communication function, a compute device, a processing device connected to a wireless modem, an on-board device, a wearable device, a terminal device in Internet of Things, a household appliance, a virtual reality (virtual reality, VR) terminal, an augmented reality (augmented reality, AR) terminal, a wireless terminal in industrial control, a wireless terminal in self driving, a wireless terminal in remote medical, a wireless terminal in a smart grid, a wireless terminal in a smart city (smart city), a wireless terminal in a smart home (smart home), a vehicle with a vehicle-to-vehicle (vehicle-to-vehicle, V2V) communication capability, an intelligent connected vehicle, an unmanned aerial vehicle with an uncrewed aerial vehicle-to-uncrewed aerial vehicle (UAV-to-UAV, U2U) communication capability, a Wi-Fi terminal device (such as a vehicle-mounted terminal, a smartphone, or a pad that has a function of connecting to a Wi-Fi access point (access point, AP)), a terminal device in a future network, a terminal device in a future evolved public land mobile network (public land mobile network, PLMN), or the like. This is not limited.

The network device in FIG. 1 may be any device that is deployed in an access network and that can perform wireless communication with a terminal device, or may be a chip or a chip system that can be disposed in the device, or may be a logic node or a logic module or a function implemented by software, and may be configured to implement functions such as radio physical control, resource scheduling and radio resource management, radio access control, and mobility management. Specifically, the network device may be a device supporting wired access, or may be a device supporting wireless access.

For example, the network device may include one or more access network (access network, AN) or radio access network (radio access network, RAN) nodes. The AN/RAN node may be a base station, a continuously evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), or a Wi-Fi AP. The base station may be a 4G, 5G, 5.5G, future 6G base station, or the like, and this is not limited. The Wi-Fi AP may be Wi-Fi 5, Wi-Fi 6, a future Wi-Fi AP product, or the like, and this is not limited.

In another example, the network device may include a baseband unit (baseband unit, BBU) and a remote radio unit (remote radio unit, RRU). The BBU and the RRU may be placed at different places. For example, the RRU is remote and placed in a heavy-traffic area, and the BBU is placed in a central equipment room. Alternatively, the BBU and the RRU may be placed in a same equipment room. Alternatively, the BBU and the RRU may be different components in a rack.

In still another example, the network device may alternatively be a device including a central unit (central unit, CU) node, including a distributed unit (distributed unit, DU) node, or including a CU node and a DU node. For example, the network device may be divided into a CU and a DU from a perspective of logical functions. Some protocol layer functions are centrally controlled by the CU, remaining or all protocol layer functions are distributed in the DU, and the CU centrally controls the DU. The CU and the DU may be separately disposed, or may be included in a same network element, for example, a BBU. Further, the central unit CU may be further divided into a control plane (CU-CP) and a user plane (CU-UP).

In still another example, the network device may alternatively be a device including a radio unit (radio unit, RU) or including a CU, a DU, and an RU. The RU may be included in a radio frequency device or a radio frequency unit, for example, included in an RRU, an active antenna unit (active antenna unit, AAU), or a remote radio head (remote radio head, RRH).

It may be understood that in different systems, the CU (or the CU-CP and the CU-UP), the DU, or the RU may also have different names, but a person skilled in the art may understand meanings of the names. For example, in an open radio access network (open radio access network, O-RAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

Based on the foregoing communication system, for example, the sensing measurement method provided in embodiments of this application may be applied to any communication scenario shown in FIG. 2 to FIG. 8.

As shown in FIG. 2, a network device may be used as a transmitter device and a control device, and a terminal device may be used as a receiver device. A sensing signal transmitted by the network device may be reflected by a vehicle (or may be another target object such as a bicycle or an unmanned aerial vehicle) and then received by the terminal device. After receiving the sensing signal, the terminal device may perform signal processing at a processing node to obtain a sensing result. The sensing result may include information such as a distance, a velocity, an angle, and strength.

The control device may be configured to control the transmitter device to send the sensing signal. The processing node may be located in the receiver device, or may be the receiver device. This is not limited.

As shown in FIG. 3, a terminal device may be used as a transmitter device, and a network device may be used as a receiver device and a control device. A sensing signal transmitted by the terminal device may be reflected by a vehicle (or may be another target such as a bicycle or an unmanned aerial vehicle) and then received by the network device. After receiving the sensing signal, the network device may perform signal processing at a processing node to obtain a sensing result. The sensing result may include information such as a distance, a velocity, an angle, and strength.

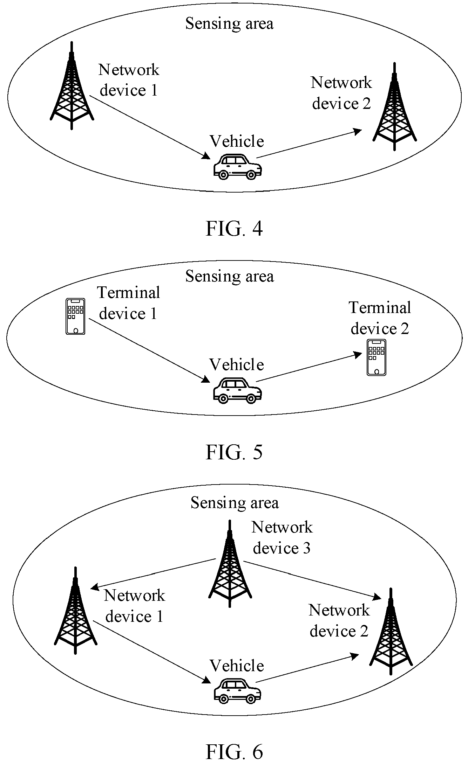

As shown in FIG. 4, a network device 1 may be used as a transmitter device and a control device, and a network device 2 may be used as a receiver device. A sensing signal transmitted by the network device 1 may be reflected by a vehicle (or may be another target such as a bicycle or an unmanned aerial vehicle) and then received by the network device 2. After receiving the sensing signal, the network device 2 may perform signal processing at a processing node to obtain a sensing result. The sensing result may include information such as a distance, a velocity, an angle, and strength.

As shown in FIG. 5, a terminal device 1 may be used as a transmitter device and a control device, and a terminal device 2 may be used as a receiver device. A sensing signal transmitted by the terminal device 1 may be reflected by a vehicle (or may be another target such as a bicycle or an unmanned aerial vehicle) and then received by the terminal device 2. After receiving the sensing signal, the terminal device 2 may perform signal processing at a processing node to obtain a sensing result. The sensing result may include information such as a distance, a velocity, an angle, and strength.

As shown in FIG. 6, a network device 1 may be used as a transmitter device, a network device 2 may be used as a receiver device, and a network device 3 may be used as a control device. A sensing signal transmitted by the network device 1 may be reflected by a vehicle (or may be another target such as a bicycle or an unmanned aerial vehicle) and then received by the network device 2. After receiving the sensing signal, the network device 2 may perform signal processing at a processing node to obtain a sensing result. The sensing result may include information such as a distance, a velocity, an angle, and strength.

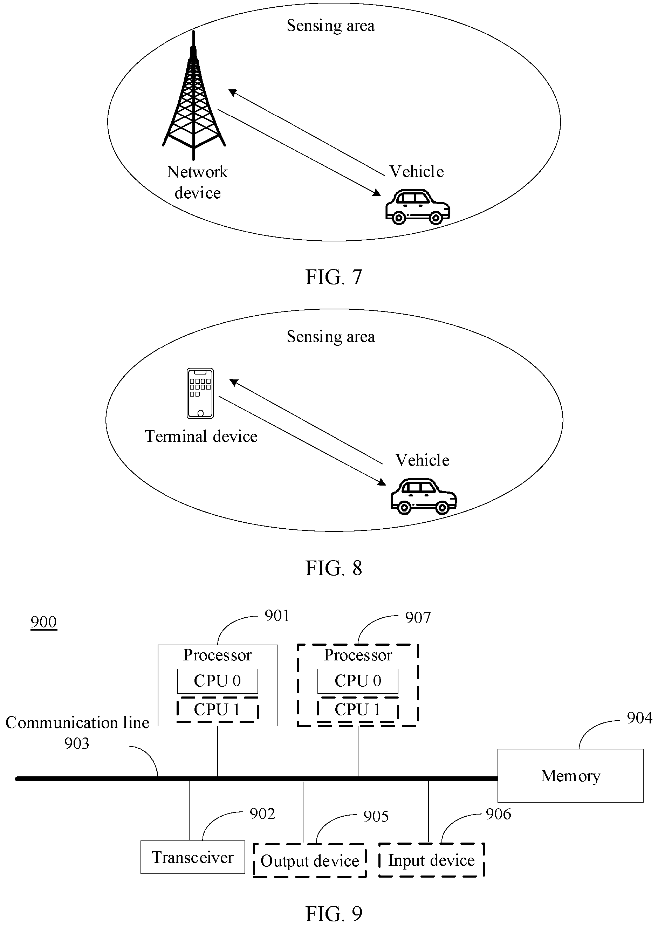

As shown in FIG. 7, a network device may be used as a transmitter device, a receiver device and a control device. A sensing signal transmitted by the network device may be reflected by a vehicle (or may be another target such as a bicycle or an unmanned aerial vehicle) and then received by the network device. After receiving the sensing signal, the network device may perform signal processing at a processing node to obtain a sensing result. The sensing result may include information such as a distance, a velocity, an angle, and strength.

As shown in FIG. 8, a terminal device may be used as a transmitter device, a receiver device and a control device. A sensing signal transmitted by the terminal device may be reflected by a vehicle (or may be another target such as a bicycle or an unmanned aerial vehicle) and then received by the terminal device. After receiving the sensing signal, the terminal device may perform signal processing at a processing node to obtain a sensing result. The sensing result may include information such as a distance, a velocity, an angle, and strength.

For specific implementation, refer to FIG. 1 or FIG. 8. For example, each terminal device and each network device may use a composition structure shown in FIG. 9, or include components shown in FIG. 9. FIG. 9 is a diagram of composition of a communication apparatus 900 according to an embodiment of this application. The communication apparatus 900 may be a terminal device, or a chip or a system on chip in the terminal device; or may be a network device, or a chip or a system on chip in the network device. As shown in FIG. 9, the communication apparatus 900 includes a processor 901, a transceiver 902, and a communication line 903.

Further, the communication apparatus 900 may further include a memory 904. The processor 901, the memory 904, and the transceiver 902 may be connected through the communication line 903.

The processor 901 is a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 901 may be another apparatus having a processing function, for example, a circuit, a component, or a software module. This is not limited.

The transceiver 902 is configured to communicate with another device or another communication network. The another communication network may be an Ethernet, a radio access network (radio access network, RAN), a wireless local area network (wireless local area network, WLAN), or the like. The transceiver 902 may be a module, a circuit, a transceiver, or any apparatus that can implement communication.

The communication line 903 is used to transmit information between components included in the communication apparatus 900.

The memory 904 is configured to store instructions. The instruction may be a computer program.

The memory 904 may be a read-only memory (read-only memory, ROM) or another type of static storage device that can store static information and/or instructions, or may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, or the like), a magnetic disk storage medium, another magnetic storage device, or the like. This is not limited.

It should be noted that the memory 904 may exist independently of the processor 901, or may be integrated with the processor 901. The memory 904 may be configured to store instructions, program code, some data, or the like. The memory 904 may be located in the communication apparatus 900, or may be located outside the communication apparatus 900. This is not limited. The processor 901 is configured to execute the instructions stored in the memory 904, to implement the method provided in the foregoing embodiments of this application.

In an example, the processor 901 may include one or more CPUs, for example, a CPU 0 and a CPU 1 in FIG. 9.

In an optional implementation, the communication apparatus 900 includes a plurality of processors. For example, in addition to the processor 901 in FIG. 9, the communication apparatus 900 may further include a processor 907.

In an optional implementation, the communication apparatus 900 further includes an output device 905 and an input device 906. For example, the input device 906 is a device like a keyboard, a mouse, a microphone, or a joystick, and the output device 905 is a device like a display or a speaker (speaker).

It should be noted that the communication apparatus 900 may be a desktop computer, a portable computer, a network server, a mobile phone, a tablet computer, a wireless terminal, an embedded device, a chip system, or a device having a similar structure in FIG. 9. In addition, the composition structure shown in FIG. 9 does not constitute a limitation on the communication apparatus. In addition to the components shown in FIG. 9, the communication apparatus may include more or fewer components than those shown in the figure, or combine some components, or have different component arrangements.

In this embodiment of this application, the chip system may include a chip, or may include a chip and another discrete device.

In addition, actions, terms, and the like in embodiments of this application may be mutually referenced. This is not limited. In embodiments of this application, names of messages exchanged between devices, names of parameters in the messages, or the like are merely examples. Other names may alternatively be used during specific implementation. This is not limited.

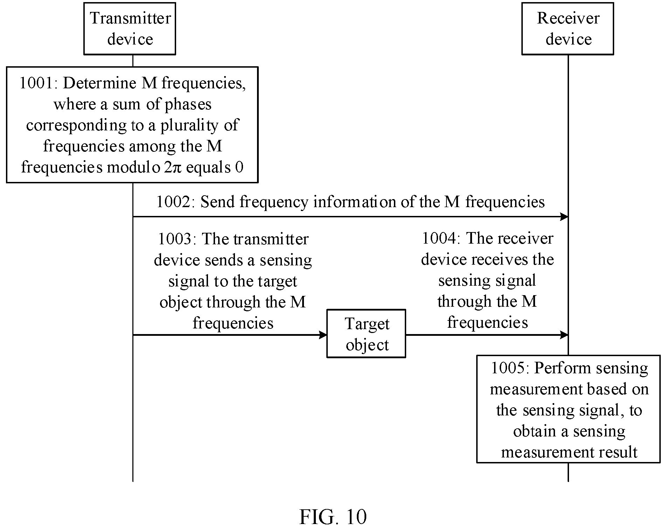

With reference to the communication system shown in FIG. 1, the following describes a sensing measurement method provided in an embodiment of this application with reference to FIG. 10. A transmitter device may be any terminal device or network device in the communication system shown in FIG. 1, and a receiver device may also be any terminal device or network device in the communication system shown in FIG. 1. The transmitter device or the receiver device described in the following embodiment may have the components shown in FIG. 9.

FIG. 10 is a flowchart of a sensing measurement method according to an embodiment of this application. As shown in FIG. 10, the method may include the following steps.

Step 1001: The transmitter device determines M frequencies.

A sum of phases corresponding to a plurality of frequencies among the M frequencies modulo 2π equals 0.

Optionally, a phase difference between phases corresponding to two adjacent frequencies among the plurality of frequencies arranged in ascending order (or in descending order) may be π/2ⁿ, where n is an integer.

For example, the transmitter device may select, from N available frequencies, the M frequencies for sensing, where the N available frequencies may be predefined frequencies, and a specific value of M may also be a value predefined by the transmitter device.

Based on the foregoing descriptions of the M frequencies, in a possible design, the M frequencies may include at least one group of frequencies, each group of frequencies among the at least one group of frequencies may include a plurality of frequencies, and a sum of phases corresponding to the frequencies in each group modulo 2π equals 0.

The at least one group of frequencies may be some of the M frequencies, or the at least one group of frequencies may be all of the M frequencies. This is not limited.

Optionally, a phase difference between phases corresponding to two adjacent frequencies in each group of frequencies arranged in ascending order (or in descending order) may be π/2ⁿ, where n is an integer.

For example, the at least one group is K groups. The M frequencies may include K groups of frequencies, each group of frequencies among the K groups of frequencies may include 2ⁿ⁺¹ frequencies, a sum of phases corresponding to the 2ⁿ⁺¹ frequencies modulo 2π equals 0, and K is greater than or equal to 1.

K*2ⁿ⁺¹ may be less than or equal to M.

For example, for a k^{th} group of frequencies (k=1, 2, ..., K) among the K groups of frequencies, phases that correspond to 2ⁿ⁺¹ frequencies included in the k^{th} group of frequencies and that are arranged in ascending order may be represented as $\left[{θ}_{1}^{k}, {θ}_{2}^{k}, …, {θ}_{{2}^{n + 1}}^{k}\right] , {\sum }_{m = 1}^{{2}^{n + 1}} {θ}_{m}^{k} mod 2 π = 0$ , where ${\sum }_{m = 1}^{{2}^{n + 1}} {θ}_{m}^{k}$ represents a sum of the phases corresponding to 2ⁿ⁺¹ frequencies included in the k^{th} group of frequencies, and mod represents a modulo operation. In other words, ${\sum }_{m = 1}^{{2}^{n + 1}} {θ}_{m}^{k} modulo 2 π$ equals 0.

Optionally, a phase difference between phases corresponding to two adjacent frequencies in the foregoing 2ⁿ⁺¹ frequencies arranged in ascending order (or in descending order) may be π/2ⁿ, where n is an integer.

Optionally, the phase corresponding to the frequency may be an integer multiple of 2πΔfΔτ, where Δf represents an integer multiple of a subcarrier spacing, and Δτ is determined based on a highest frequency and a lowest frequency among the M frequencies.

A possible value set of the subcarrier spacing may be {15, 30, 60, 120, 240} kHz.

For example, $Δf = {f}_{scs} ∗ round \left(\frac{Δf}{{f}_{scs}}\right)$, where f*_{scs}* represents the subcarrier spacing, and round represents a rounding operation.

For example, a value of Δf may be approximately 1 MHz.

For example, Δτ=1/B, where B represents a difference between the maximum frequency and the minimum frequency among the M frequencies.

Optionally, the frequency and the phase corresponding to the frequency may satisfy the following formula: *f* = (*θ* - *ϕ*)/2*π*Δ*τ*, where *f* represents the frequency, *θ* represents the phase corresponding to the frequency, *ϕ* is determined according to an injective function, and Δτ is determined based on the highest frequency and the lowest frequency among the M frequencies.

Frequencies in a same group correspond to same *ϕ*, and frequencies in different groups correspond to different *ϕ*.

For example, the M frequencies include K groups of frequencies, and an m^{th} frequency ${f}_{m}^{k}$ in a k^{th} group of frequencies may be equal to $\left({θ}_{m}^{k}-{ϕ}_{k}\right) / 2 π Δ τ$.

k=1, 2, ..., K. m=1, 2, ..., 2ⁿ⁺¹. ${θ}_{m}^{k}$ represents a phase corresponding to the frequency ${f}_{m}^{k}$. A phase difference between ${θ}_{m}^{k}$ and ${θ}_{m - 1}^{k}$ may be π/2ⁿ. ${θ}_{m - 1}^{k}$ represents a phase corresponding to a frequency ${f}_{m - 1}^{k}$. ${θ}_{m}^{k}$ may be an integer multiple of 2πΔfΔτ. *ϕₖ* = 2πµ(k)ΔfΔτ, where µ(k) represents a random integer related to k, and different values of k correspond to different values of µ(k), that is, µ(k) is an injective function of k.

Based on the foregoing descriptions of the M frequencies, the following provides three possible examples:
In a first possible example, n=0, the M frequencies may include M/2 groups of frequencies, each group of frequencies may include two frequencies, and a phase difference between phases corresponding to two adjacent frequencies in the two frequencies may be π.
In a second possible example, n=1, the M frequencies may include M/4 groups of frequencies, each group of frequencies may include four frequencies, and a phase difference between phases corresponding to two adjacent frequencies among the four frequencies arranged in ascending order (or descending order) may be π/2.
In a third possible example, n=2, the M frequencies may include M/8 groups of frequencies, each group of frequencies may include eight frequencies, and a phase difference between phases corresponding to two adjacent frequencies among the eight frequencies arranged in ascending order (or descending order) may be π/4.

Step 1002: The transmitter device sends frequency information of the M frequencies to the receiver device, and correspondingly, the receiver device receives the frequency information of the M frequencies from the transmitter device.

The frequency information of the frequency may include a frequency value of the frequency, or the frequency information of the frequency may include an index value of the frequency.

For example, the index value of the frequency may be a value obtained by rounding a quotient of the frequency by the subcarrier spacing. In other words, the index value of the frequency is obtained by rounding f/f*_{scs}*, where f represents the frequency, and f*_{scs}* represents the subcarrier spacing.

Optionally, the transmitter device may send the frequency information of the M frequencies to the receiver device through an air interface.

Step 1003: The transmitter device sends a sensing signal to a target object through the M frequencies.

For example, the sensing signal may be an orthogonal frequency division multiplexing (orthogonal frequency division multiplexing, OFDM) signal.

Step 1004: The receiver device receives the sensing signal through the M frequencies.

After the sensing signal sent by the transmitter device passes through the air interface and is acted upon by the target object (for example, reflected by the target object), the receiver device may receive the sensing signal on the M frequencies indicated by the transmitter device.

Step 1005: The receiver device performs sensing measurement based on the sensing signal, to obtain a sensing measurement result.

For example, the sensing measurement result may be information such as a distance, an angle, a velocity, a position, and strength of the target object. This is not limited.

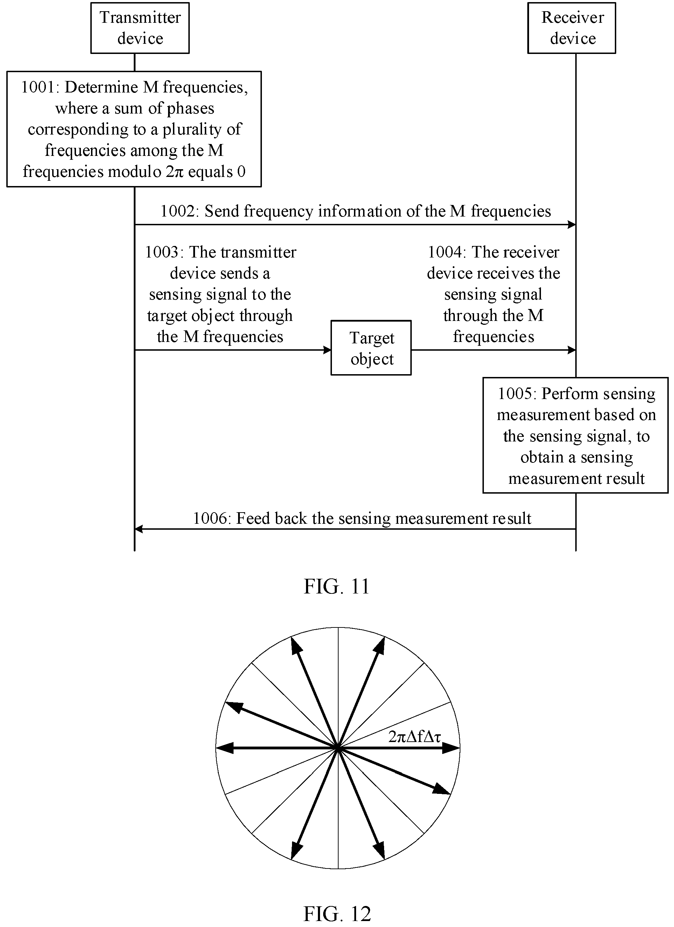

Optionally, as shown in step 1006 in FIG. 11, the receiver device may further feed back the sensing measurement result to the transmitter device. Correspondingly, the transmitter device receives the sensing measurement result fed back by the receiver device.

For example, the receiver device may feed back the sensing measurement result to the transmitter device through the air interface.

According to the method shown in FIG. 10, a sum of phases corresponding to a plurality of frequencies among the M frequencies that are determined by the transmitter device for sensing modulo 2π equals 0. This can ensure a higher ranging resolution without ambiguity in ranging. In addition, the M frequencies may be non-uniformly distributed in frequency domain, so that frequency domain resources occupied by the sensing signal can be reduced, thereby reducing frequency domain resource overheads. Further, in this embodiment of this application, a clear sparse sensing signal pattern (that is, a distribution pattern of the M frequencies) can be provided, to reduce computational complexity while reducing frequency domain resources occupied by the sensing signal, thereby implementing efficient allocation of frequency domain resources and improving communication performance.

Optionally, the transmitter device in this embodiment of this application may be a terminal device, or may be a network device. When the transmitter device is a network device, processing actions (for example, determining the M frequencies and generating the sensing signal) of the network device may be performed by a CU and/or a DU of the network device, and sending and receiving actions (for example, sending the frequency information of the M frequencies, sending the sensing signal, and receiving the sensing measurement result) of the network device may be performed by an RU of the network device.

Optionally, the receiver device in this embodiment of this application may be a terminal device, or may be a network device. When the receiver device is a network device, processing actions (for example, performing sensing measurement and generating the sensing measurement result) of the network device may be performed by a CU and/or a DU of the network device, and sending and receiving actions (for example, receiving the sensing signal and feeding back the sensing measurement result) of the network device may be performed by an RU of the network device.

It may be understood that the CU, the DU, and the RU of the network device may be independently deployed, or the CU and the DU are deployed in one network device, or the CU, the DU, and the RU are deployed in one network device. This is not limited.

Optionally, taking the M frequencies including K groups of frequencies as an example, the transmitter device may determine the K groups of frequencies according to the following phase cancellation principle.

It is assumed that there are Q candidate frequencies in frequency domain, M frequencies may be selected from the Q frequencies for sensing, and a corresponding observation equation may be written as follows: $y = ΦF x = Ψ x$$y ∈ {ℂ}^{M \times 1}$, and ***y*** is a complex vector of dimension M×1, and each value of *y* represents a response received on each of the M frequencies. $x ∈ {ℂ}^{N \times 1}$, and ***x*** represents amplitudes of a transmitted signal at different delays. Specifically, ***x*** may be expressed as: $x = \left[\begin{matrix}{x}_{1} \\ {x}_{2} \\ {x}_{3} \\ ⋮ \\ {x}_{N}\end{matrix}\right]$

*x*₁ represents an amplitude, of a transmitted signal *x*₀ passing through a target object 1, at a corresponding delay τ₁, ..., and *x_{N}* represents an amplitude, of the transmitted signal *x*₀ passing through a target object N, at a corresponding delay τ*_{N}.*

In the foregoing Formula (1), $F ∈ {ℂ}^{Q \times N}$, and **F** represents a Fourier transform matrix, where a row in the matrix represents a change in a frequency dimension, and a column in the matrix represents a change in a delay dimension. Specifically, the matrix F may be expressed as follows: $F = \left[\begin{matrix}{e}^{- j 2 π {f}_{1} {τ}_{1}} & ⋯ & {e}^{- j 2 π {f}_{1} {τ}_{N}} \\ ⋮ & ⋱ & ⋮ \\ {e}^{- j 2 π \left({f}_{1}+\left(Q-1\right)Δf\right) {τ}_{1}} & ⋯ & {e}^{- j 2 π \left({f}_{1}+\left(Q-1\right)Δf\right) {τ}_{N}}\end{matrix}\right]$

*Δf* represents a spacing between two adjacent frequencies.

In the foregoing Formula (1), $Φ ∈ {ℂ}^{M \times Q}$, and ***Φ*** represents a frequency selection matrix, that is, selection of the M frequencies from the Q frequencies. Specifically, the matrix ***Φ*** may be written as follows: $Φ = \left[\begin{matrix}100000 \\ 001000 \\ . . . . . . \\ 000001\end{matrix}\right]$

In each row of the matrix, only one element is 1, and other elements are 0. In addition, at most one element in each column is 1. If an element in a q^{th} column is 1, it indicates that a q^{th} frequency is selected for sensing. The M frequencies selected from the Q frequencies may be numbered, that is, frequencies used for sensing may be expressed as {*f*₁, *f*₂, ... , *f_{M}*}.

In the foregoing Formula (1), $Ψ ∈ {ℂ}^{M \times N}$, and **Ψ** represents an observation matrix, and may be specifically expressed as follows: $Ψ = \left[\begin{matrix}{e}^{- j 2 π {f}_{1} {τ}_{1}} & ⋯ & {e}^{- j 2 π {f}_{1} {τ}_{N}} \\ ⋮ & ⋱ & ⋮ \\ {e}^{- j 2 π {f}_{M} {τ}_{1}} & ⋯ & {e}^{- j 2 π {f}_{M} {τ}_{N}}\end{matrix}\right]$

During actual application, most elements in the vector ***x*** are 0, and only a small quantity of elements in the vector ***x*** are not 0. For example, it may be assumed that there are only K elements that are not 0 in the vector ***x***. Therefore, even if a quantity M of measurement samples (that is, the M frequencies) is far less than a quantity N of unknown numbers (that is, a quantity N of target objects), values of the K elements that are not 0 can still be accurately restored. That is, the vector ***x*** can be restored based on the M frequencies, and a sensing result can be obtained through analysis based on the vector ***x***.

Based on the foregoing observation matrix, a design purpose of a sparse sensing signal is to achieve optimal observation performance by selecting a small quantity of frequency resources. To quantitatively evaluate quality of the observation matrix, a column correlation of the matrix may be introduced. For a matrix $Ψ ∈ {ℂ}^{M \times N}$, a column correlation of the matrix may be defined as: $μ \left(Ψ\right) = {max}_{i \neq j} \left|\left〈{ψ}_{i}^{′}, {ψ}_{j}^{′}\right〉\right|$${ψ}_{i}^{′}$ is a result of normalization of *ψ*, that is, ${\left‖{ψ}_{i}^{′}\right‖}_{2}^{2} = 1$. The column correlation describes a correlation between two measurement bases at different delays. Ideally, each column of the observation matrix is expected to be orthogonal, that is, the column correlation is 0. However, in practice, when a dimension M of the matrix is less than N, a rank of the matrix rank(**Ψ**) ≤ *N,* which means that columns of the matrix **Ψ** cannot be completely orthogonal.

The observation matrix may be written as follows: $Ψ = \left[\begin{matrix}{e}^{- j 2 π {f}_{1} {τ}_{1}} & ⋯ & {e}^{- j 2 π {f}_{1} {τ}_{N}} \\ ⋮ & ⋱ & ⋮ \\ {e}^{- j 2 π {f}_{M} {τ}_{1}} & ⋯ & {e}^{- j 2 π {f}_{M} {τ}_{N}}\end{matrix}\right]$

Therefore, a correlation between a p^{th} column and a q^{th} column may be expressed as: $\left〈{ψ}_{p}, {ψ}_{q}\right〉 = {ψ}_{p}^{H} {ψ}_{q} = {\sum }_{m = 1}^{M} {e}^{j 2 {πf}_{m} {τ}_{p}} {e}^{- j 2 {πf}_{m} {τ}_{q}} = {\sum }_{m = 1}^{M} {e}^{j 2 {πf}_{m} \left({τ}_{p}-{τ}_{q}\right)} ,$ where
τ*ₚ* = *p*Δ*τ*, and τ*_{q}* = *q*Δ*τ*; and $\left|{ψ}_{p}, {ψ}_{q}\right| = \left|{\sum }_{m = 1}^{M} {e}^{j 2 {πf}_{m} \left({τ}_{p}-{τ}_{q}\right)}\right| = \left|{\sum }_{m = 1}^{M} {e}^{j 2 {πf}_{m} \left(p-q\right) Δ τ}\right|$

It is assumed that a smaller value of (p-q) indicates a stronger correlation between the p^{th} column and the q^{th} column. In this case, a column correlation for p-q=1 may be preferentially optimized, to minimize the correlation, thereby achieving better observation performance. When a value of (p-q) is large, target objects may be distinguished not only by distance but also by angle.

When p-q=2⁰=1 (that is, n=0), the correlation between the two columns may be written as follows: $\left|{ψ}_{p}, {ψ}_{q}\right| = \left|{\sum }_{m = 1}^{M} {e}^{j 2 {πf}_{m} \left({τ}_{p}-{τ}_{q}\right)}\right| = \left|{\sum }_{m = 1}^{M} {e}^{j 2 {πf}_{m} Δ τ}\right| = \left|{\sum }_{m = 1}^{M} {e}^{j 2 π \left({f}_{1}+Δ{f}_{m}\right) Δ τ}\right| ,$ where
*fₘ = f*₁ *+* Δ*fₘ*, and the foregoing formula may be further written as: $\left|{ψ}_{p}, {ψ}_{q}\right| = \left|{\sum }_{m = 1}^{M} {e}^{j 2 π \left({f}_{1}+Δ{f}_{m}\right) Δ τ}\right| = \left|{e}^{j 2 {πf}_{1} Δ τ}{\sum }_{m = 1}^{M} {e}^{j 2 π Δ {f}_{m} Δ τ}\right| = \left|{\sum }_{m = 1}^{M} {e}^{j 2 π Δ {f}_{m} Δ τ}\right|$

To perform quantitative optimization, a value of Δτ needs to be determined first, which may be $Δτ = \frac{1}{B}$, where B=f_{M}-f₁, f_{M} represents a maximum frequency, and f₁ represents a minimum frequency.

In a first example, when p-q=2⁰=1 (that is, n=0), as shown in FIG. 12, a unit circle may be equally divided into N parts, N is an even number, and each part spans an angle of 2π/N. In other words, an arc is equally divided into N parts, and a rotation angle corresponding to an n^{th} point on the arc is 2π*n*Δ*f*Δτ. Because the unit circle is equally divided into N parts and N is an even number, there are N/2 straight lines on the unit circle in total. In addition, phases of two vectors on a same straight line differ by π, and the two vectors respectively correspond to two frequencies (or may also be referred to as frequencies). M/2 straight lines may be randomly selected from the N/2 straight lines, and phases of the M/2 straight lines may cancel each other out. As a result, when p-q=1, |*ψₚ*, *ψ_{q}*| = 0, that is, the correlation between the p^{th} column and the q^{th} column is 0. M may be an even number.

Optionally, M/2 frequencies {*f*₁, *f*₂, ... , *f*_{*M*/2}} may be randomly selected first, and corresponding phases may be represented as [*θ*₁, *θ*₂, ... , *θ*_{*M*/2}], where θ*ᵢ* = 2*π*Δ*ƒ*Δ*τ,* and i=1, 2, ..., M/2. Further, another M/2 frequencies may be selected, and phases corresponding to the M/2 frequencies satisfy ${θ}_{\frac{M}{2} + m} - {θ}_{m} = π$, where θ*ⱼ* = 2*π*Δ*f*Δ*τ* + *π*, m=1, 2, ..., M/2; and j=M/2+1, M/2+2, ..., M.

In other words, when p-q=2⁰=1 (that is, n=0), at least one group of frequencies (for example, frequencies corresponding to θ*ᵢ* and θ*ᵢ + π*) may be selected. Phases obtained by multiplying frequencies f in each group by a delay difference Δ*τ* may pairwise form straight line pairs. As a result, phases corresponding to different frequencies are summed to achieve pairwise cancellation, minimizing the correlation between the p^{th} column and the q^{th} column. This achieves optimal observation performance by selecting a small quantity of frequency resources, thereby implementing efficient allocation of frequency domain resources, and improving communication performance.

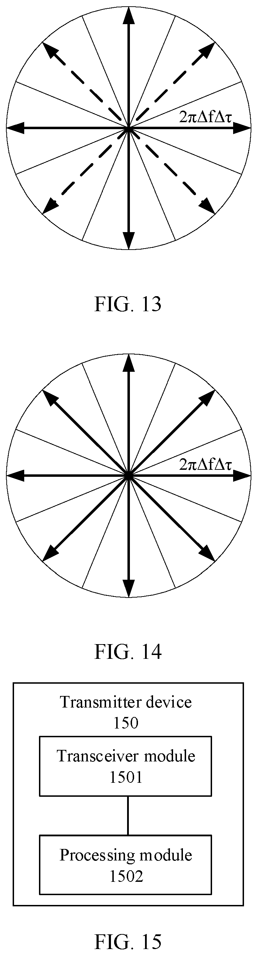

In a second example, when p-q=2¹=2 (that is, n=1), as shown in FIG. 13, two vectors on a straight line are superimposed in phase after being rotated by a factor of 2, that is, $2 \left({θ}_{\frac{M}{2} + m}-{θ}_{m}\right) = 2 π$. In this case, straight lines with a phase difference of π/2 may be selected to form a pair, so that the pair of straight lines can still cancel each other out after being rotated by a factor of 2. In other words, M/4 "crosses" may be randomly selected from N/2 straight lines, so that a column correlation between two vectors can be minimized for both p-q=1 and p-q=2. M may be an integer multiple of 4.

Optionally, M/4 frequencies {*f*₁, *f*₂, ... *, f*_{*M*/4}} may be randomly selected first, and corresponding phases may be represented as [*θ*₁, *θ*₂, ... , *θ*_{*M*/4}], where θ*ᵢ* = 2*π*Δ*f*Δ*τ*, and i=1, 2, ..., M/4. Further, 3M/4 frequencies may be selected: {*f*_{*M*/4+1}, *f*_{*M*/4+2}, ... , *f_{M}*}. Among the 3M/4 frequencies, there are M/4 frequencies whose phases differ by *π*/2 from corresponding phases of {*f*₁, *f*₂, ... , *f*_{*M*/4}}, M/4 frequencies whose phases all differ by *π* from the corresponding phases of {*f*₁, *f*₂, *...* , *f*_{*M*/4}}, and M/4 frequencies whose phases all differ by 3*π*/2 from the corresponding phases of {*f*₁, *f*₂, ... , *f*_{*M*/4}}.

In other words, when p-q=2¹=2 (that is, n=1), at least one group of frequencies (for example, frequencies corresponding to θ*ᵢ*, θ*ᵢ* + *π*/2, θ*ᵢ* + *π*, and θ*ᵢ* + 3*π*/2) may be selected. Phases obtained by multiplying frequencies f in each group by a delay difference Δ*τ* may pairwise form straight line pairs. In addition, a phase difference between two straight line pairs is *π*/2, presenting a "cross shape" on a circular ring. As a result, phases corresponding to different frequencies are summed to achieve pairwise cancellation, minimizing the column correlation between two vectors for both p-q=1 and p-q=2. This achieves optimal observation performance by selecting a small quantity of frequency resources, thereby implementing efficient allocation of frequency domain resources, and improving communication performance.

In a third example, when p-q=2²=4 (that is, n=2), as shown in FIG. 14, M/2 straight lines may be selected from N/2 straight lines, where four straight lines form one group, and the group of straight lines is uniformly distributed on a circular ring. In other words, straight lines with a phase difference of *π*/4 may be selected to form a pair, so that when p-q=1, p-q=2, and p-q=4, the column correlation between the two vectors can be minimized. M may be an integer multiple of 8.

Optionally, M/8 frequencies {*f*₁, *f*₂, ... , *t*_{*M*/8}} may be randomly selected first, and corresponding phases may be represented as [*θ*₁, *θ*₂, ... , *θ*_{*M*/8}], where θ*ᵢ* = 2πΔ*f*Δ*τ,* and i=1, 2, ..., M/8. Further, 7M/8 frequencies may be selected: {*f*_{M/8+1}, *f*_{*M*/8+2}, ... , *f_{M}*}. Among the 7M/8 frequencies, there are M/8 frequencies whose phases all differ by π/4 from corresponding phases of {*f*₁, *f*₂, ... , *f*_{*M*/8}}, M/8 frequencies whose phases all differ by *π*/2 from the corresponding phases of {*f*₁, *f*₂, ... , *f*_{*M*/8}}, M/8 frequencies whose phases all differ by 3*π* /*4* from the corresponding phases of {*f*₁, *f*₂, ... , *f*_{*M*/8}}, M/8 frequencies whose phases all differ by *π* from the corresponding phases of {*f*₁, *f*₂, ... , *f*_{*M*/8}}, M/8 frequencies whose phases all differ by 5*π*/4 from the corresponding phases of {*f*₁, *f*₂, ... , *f*_{*M*/8}}, M/8 frequencies whose phases all differ by 3π/2 from the corresponding phases of {*f*₁, *f*₂, ... , *f*_{*M*/8}), and M/8 frequencies whose phases all differ by 7*π*/4 from the corresponding phases of {*f*₁, *f*₂, ... *, f*_{*M*/8}}.

In other words, when p-q=2²=4 (that is, n=2), at least one group of frequencies (for example, frequencies corresponding to θ*ᵢ*, θ*ᵢ* + *π*/4, θ*ᵢ* + *π*/2, θ*ᵢ* + 3*π*/4, θ*ᵢ* + *π*, θ*ᵢ* + 5*π*/4, θ*ᵢ* + 3*π*/2, and θ*ᵢ* + 7*π*/4) may be selected. Phases obtained by multiplying frequencies f in each group by a delay difference Δ*τ* may pairwise form straight line pairs. In addition, a phase difference between two straight line pairs is *π*/4, uniformly distributing on a circular ring. As a result, phases corresponding to different frequencies are summed to achieve pairwise cancellation, minimizing the column correlation between two vectors for all p-q=1, p-q=2, and p-q=4. This achieves optimal observation performance by selecting a small quantity of frequency resources, thereby implementing efficient allocation of frequency domain resources, and improving communication performance.

Based on the foregoing three examples, when M frequencies are selected from N frequencies for sensing, M/2 straight lines may be selected from N/2 straight lines, where 2*ⁿ* straight lines form one group, and the group of straight lines is uniformly distributed on a circular ring, so that when p-q=2ⁿ, relative phases between different straight line groups are randomly distributed.

In other words, when p-q=2ⁿ, at least one group of frequencies may be selected. Phases obtained by multiplying frequencies f in the group by a delay difference Δ*τ* may pairwise form straight line pairs, and a phase difference between adjacent straight lines in a same group is *π*/2*ⁿ*. As a result, phases corresponding to different frequencies are summed to achieve pairwise cancellation, minimizing the column correlation between two vectors for p-q=2ⁿ. This achieves optimal observation performance by selecting a small quantity of frequency resources, thereby implementing efficient allocation of frequency domain resources, and improving communication performance.

It should be noted that various embodiments of this application may be implemented separately, or may be implemented in combination. This is not limited. Unless otherwise stated or there is a logic conflict, terms and/or descriptions in different embodiments provided in this application are consistent and may be mutually referenced, and technical features in different embodiments may be combined based on an internal logical relationship thereof, to form a new embodiment.

It may be understood that an execution body may perform some or all of the steps in embodiments of this application. The steps or operations are merely examples. Embodiments of this application may further include performing other operations or variations of various operations. In addition, the steps may be performed in a sequence different from that presented in embodiments of this application, and not all the operations in embodiments of this application need to be performed.

The solutions provided in embodiments of this application are mainly described above from a perspective of interaction between the devices. It may be understood that, to implement the foregoing functions, each device includes a corresponding hardware structure and/or a corresponding software module for performing each function. A person skilled in the art should easily be aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the devices may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

When each functional module is obtained through division based on each corresponding function, FIG. 15 shows a transmitter device 150. The transmitter device 150 may perform actions performed by a transmitter device in the methods shown in FIG. 10 to FIG. 14. All related content of steps in the foregoing method embodiments may be referenced in functional descriptions of corresponding functional modules. For technical effect that can be achieved by the transmitter device 150, refer to the foregoing method embodiments. Details are not described herein again.

The transmitter device 150 may include a transceiver module 1501 and a processing module 1502. For example, the transmitter device 150 may be a communication device, or may be a chip used in the communication device, or another combined device or component that has a function of the foregoing transmitter device. When the transmitter device 150 is the communication device, the transceiver module 1501 may be a transceiver, where the transceiver may include an antenna, a radio frequency circuit, and the like; and the processing module 1502 may be a processor (or a processing circuit), for example, a baseband processor, where the baseband processor may include one or more CPUs. When the transmitter device 150 is a component that has a function of the transmitter device, the transceiver module 1501 may be a radio frequency unit, and the processing module 1502 may be a processor (or a processing circuit), for example, a baseband processor. When the transmitter device 150 is a chip system, the transceiver module 1501 may be an input/output interface of a chip (for example, a baseband chip); and the processing module 1502 may be a processor (or a processing circuit) of the chip system, and may include one or more central processing units. It should be understood that the transceiver module 1501 in this embodiment of this application may be implemented by a transceiver or a transceiver-related circuit component, and the processing module 1502 may be implemented by a processor or a processor-related circuit component (or referred to as a processing circuit).

For example, the transceiver module 1501 may be configured to perform all sending and receiving operations performed by the transmitter device in the embodiments shown in FIG. 10 to FIG. 14, and/or configured to support another process of the technology described in this specification. The processing module 1502 may be configured to perform all operations other than the sending and receiving operations performed by the transmitter device in the embodiments shown in FIG. 10 to FIG. 14, and/or configured to support the another process of the technology described in this specification.

For example, the processing module 1502 is configured to determine M frequencies, where a sum of phases corresponding to a plurality of frequencies among the M frequencies modulo 2π equals 0. The transceiver module 1501 is configured to send frequency information of the M frequencies to a receiver device, and is further configured to send a sensing signal to a target object through the M frequencies.

In a possible design, the M frequencies include at least one group of frequencies, each group of frequencies among the at least one group of frequencies includes a plurality of frequencies, and a sum of phases corresponding to the frequencies in each group modulo 2π equals 0.

In a possible design, the M frequencies include K groups of frequencies, each group of frequencies among the K groups of frequencies includes 2ⁿ⁺¹ frequencies, a sum of phases corresponding to the 2ⁿ⁺¹ frequencies modulo 2π equals 0, K is greater than or equal to 1, and n is an integer.

In a possible design, a phase difference between phases corresponding to two adjacent frequencies in the plurality of frequencies arranged in ascending order (or descending order) among the M frequencies is π/2ⁿ, where n is an integer.

In a possible design, the M frequencies include at least one group of frequencies, each group of frequencies among the at least one group of frequencies includes a plurality of frequencies, a phase difference between phases corresponding to two adjacent frequencies in each group of frequencies arranged in ascending order (or descending order) is π/2ⁿ, and n is an integer.

In a possible design, the M frequencies include K groups of frequencies, each group of frequencies among the K groups of frequencies includes 2ⁿ⁺¹ frequencies, a phase difference between phases corresponding to two adjacent frequencies among the 2ⁿ⁺¹ frequencies arranged in ascending order (or descending order) is π/2ⁿ, and n is an integer.

In a possible design, the phase corresponding to the frequency is an integer multiple of 2πΔfΔτ, where Δf represents an integer multiple of a subcarrier spacing, and Δτ is determined based on a highest frequency and a lowest frequency among the M frequencies.

In a possible design, the frequency and the phase corresponding to the frequency satisfy the following formula: *f* = (*θ* - *ϕ*)/2*π*Δ*τ*, where *f* represents the frequency, *θ* represents the phase corresponding to the frequency, *ϕ* is determined according to an injective function, and Δτ is determined based on the highest frequency and the lowest frequency among the M frequencies.

In a possible design, frequencies in a same group correspond to the same *ϕ*, and frequencies in different groups correspond to different *ϕ*.

In a possible design, the M frequencies include M/2 groups of frequencies, each group of frequencies includes two frequencies, and a phase difference between phases corresponding to two adjacent frequencies in the two frequencies is π.

In a possible design, the M frequencies include M/4 groups of frequencies, each group of frequencies includes four frequencies, and a phase difference between phases corresponding to two adjacent frequencies among the four frequencies arranged in ascending order (or descending order) is π/2.

In a possible design, the M frequencies include M/8 groups of frequencies, each group of frequencies includes eight frequencies, and a phase difference between phases corresponding to two adjacent frequencies among the eight frequencies arranged in ascending order (or descending order) is π/4.

In a possible design, the frequency information of the frequency includes a frequency value of the frequency; or the frequency information of the frequency includes an index value of the frequency.

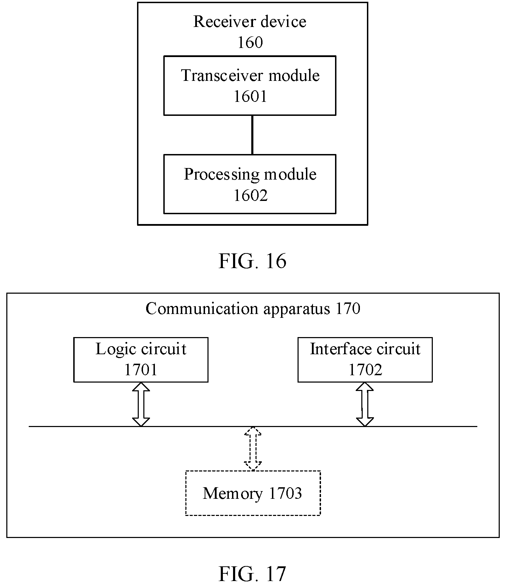

FIG. 16 shows a receiver device 160. The receiver device 160 may perform actions performed by a receiver device in the methods shown in FIG. 10 to FIG. 14. All related content of steps in the foregoing method embodiments may be referenced in functional descriptions of corresponding functional modules. For technical effect that can be achieved by the receiver device 160, refer to the foregoing method embodiments. Details are not described herein again.

The receiver device 160 may include a transceiver module 1601 and a processing module 1602. For example, the receiver device 160 may be a communication device, or may be a chip used in the communication device, or another combined device or component that has a function of the foregoing receiver device. When the receiver device 160 is the communication device, the transceiver module 1601 may be a transceiver, where the transceiver may include an antenna, a radio frequency circuit, and the like; and the processing module 1602 may be a processor (or a processing circuit), for example, a baseband processor, where the baseband processor may include one or more CPUs. When the receiver device 160 is a component that has a function of the receiver device, the transceiver module 1601 may be a radio frequency unit, and the processing module 1602 may be a processor (or a processing circuit), for example, a baseband processor. When the receiver device 160 is a chip system, the transceiver module 1601 may be an input/output interface of a chip (for example, a baseband chip); and the processing module 1602 may be a processor (or a processing circuit) of the chip system, and may include one or more central processing units. It should be understood that the transceiver module 1601 in this embodiment of this application may be implemented by a transceiver or a transceiver-related circuit component, and the processing module 1602 may be implemented by a processor or a processor-related circuit component (or referred to as a processing circuit).

For example, the transceiver module 1601 may be configured to perform all sending and receiving operations performed by the receiver device in the embodiments shown in FIG. 10 to FIG. 14, and/or configured to support another process of the technology described in this specification. The processing module 1602 may be configured to perform all operations other than the sending and receiving operations performed by the receiver device in the embodiments shown in FIG. 10 to FIG. 14, and/or configured to support the another process of the technology described in this specification.

For example, the transceiver module 1601 is configured to receive frequency information of M frequencies from a transmitter device, where a sum of phases corresponding to a plurality of frequencies among the M frequencies modulo 2π equals 0; the transceiver module 1601 is further configured to receive a sensing signal through the M frequencies; and the processing module 1602 is configured to perform sensing measurement based on the sensing signal to obtain a sensing measurement result.

In a possible design, the M frequencies include at least one group of frequencies, each group of frequencies among the at least one group of frequencies includes a plurality of frequencies, and a sum of phases corresponding to the frequencies in each group modulo 2π equals 0.

In a possible design, the M frequencies include K groups of frequencies, each group of frequencies among the K groups of frequencies includes 2ⁿ⁺¹ frequencies, a sum of phases corresponding to the 2ⁿ⁺¹ frequencies modulo 2π equals 0, K is greater than or equal to 1, and n is an integer.

In a possible design, a phase difference between phases corresponding to two adjacent frequencies in the plurality of frequencies arranged in ascending order (or descending order) among the M frequencies is π/2ⁿ, where n is an integer.

In a possible design, the M frequencies include at least one group of frequencies, each group of frequencies among the at least one group of frequencies includes a plurality of frequencies, a phase difference between phases corresponding to two adjacent frequencies in each group of frequencies arranged in ascending order (or descending order) is π/2ⁿ, and n is an integer.

In a possible design, the M frequencies include K groups of frequencies, each group of frequencies among the K groups of frequencies includes 2ⁿ⁺¹ frequencies, a phase difference between phases corresponding to two adjacent frequencies among the 2ⁿ⁺¹ frequencies arranged in ascending order (or descending order) is π/2ⁿ, and n is an integer.

In a possible design, the phase corresponding to the frequency is an integer multiple of 2πΔfΔτ, where Δf represents an integer multiple of a subcarrier spacing, and Δτ is determined based on a highest frequency and a lowest frequency among the M frequencies.

In a possible design, the frequency and the phase corresponding to the frequency satisfy the following formula: *f* = (*θ* - *ϕ*)/2*π*Δ*τ*, where *f* represents the frequency, *θ* represents the phase corresponding to the frequency, *ϕ* is determined according to an injective function, and Δτ is determined based on the highest frequency and the lowest frequency among the M frequencies.

In a possible design, frequencies in a same group correspond to the same *ϕ*, and frequencies in different groups correspond to different *ϕ*.

In a possible design, the M frequencies include M/2 groups of frequencies, each group of frequencies includes two frequencies, and a phase difference between phases corresponding to two adjacent frequencies in the two frequencies is π.

In a possible design, the M frequencies include M/4 groups of frequencies, each group of frequencies includes four frequencies, and a phase difference between phases corresponding to two adjacent frequencies among the four frequencies arranged in ascending order (or descending order) is π/2.

In a possible design, the M frequencies include M/8 groups of frequencies, each group of frequencies includes eight frequencies, and a phase difference between phases corresponding to two adjacent frequencies among the eight frequencies arranged in ascending order (or descending order) is π/4.

In a possible design, the frequency information of the frequency includes a frequency value of the frequency; or the frequency information of the frequency includes an index value of the frequency.

In another implementation, the transceiver module 1501 in FIG. 15 may be replaced with a transceiver, where a function of the transceiver module 1501 may be integrated into the transceiver; and the processing module 1502 may be replaced with a processor, where a function of the processing module 1502 may be integrated into the processor. Further, the transmitter device 150 shown in FIG. 15 may include a memory. Alternatively, the transceiver module 1601 in FIG. 16 may be replaced with a transceiver, where a function of the transceiver module 1601 may be integrated into the transceiver; and the processing module 1602 may be replaced with a processor, where a function of the processing module 1602 may be integrated into the processor. Further, the receiver device 160 shown in FIG. 16 may include a memory.

Alternatively, when the processing module 1502 is replaced with the processor, and the transceiver module 1501 is replaced with the transceiver, the transmitter device 150 in this embodiment of this application may be alternatively a communication apparatus 170 shown in FIG. 17. Alternatively, when the processing module 1602 is replaced with the processor, and the transceiver module 1601 is replaced with the transceiver, the receiver device 160 in this embodiment of this application may be alternatively a communication apparatus 170 shown in FIG. 17.

The processor may be a logic circuit 1701, and the transceiver may be an interface circuit 1702. Further, the communication apparatus 170 shown in FIG. 17 may further include a memory 1703.

An embodiment of this application further provides a computer program product. When the computer program product is executed by a computer, a function of any one of the foregoing method embodiments may be implemented.

An embodiment of this application further provides a computer program. When the computer program is executed by a computer, a function of any one of the foregoing method embodiments may be implemented.

An embodiment of this application further provides a computer-readable storage medium. All or some of procedures in the foregoing method embodiments may be implemented by a computer program instructing related hardware. The program may be stored in the foregoing computer-readable storage medium. When the program is executed, the procedures in the foregoing method embodiments may be performed. The computer-readable storage medium may be an internal storage unit in the terminal in any one of the foregoing embodiments (including a data transmitting side and/or a data receiving side), for example, a hard disk or an internal memory of the terminal. The foregoing computer-readable storage medium may also be an external storage device of the foregoing terminal, for example, a plug-in hard disk, a smart media card (smart media card, SMC), a secure digital (secure digital, SD) card, or a flash card (flash card) that is configured on the terminal. Further, the computer-readable storage medium may further include both an internal storage unit and an external storage device of the terminal. The computer-readable storage medium is configured to store the computer program and other programs and data required by the terminal. The computer-readable storage medium may be further configured to temporarily store data that has been output or is to be output.

It should be noted that, in the specification, claims, and accompanying drawings of this application, the terms "first", "second", and the like are intended to distinguish between different objects but do not indicate a particular order. "First" and "second" are merely intended for description, and shall not be understood as an indication or implication of relative importance or an implicit indication of a quantity of indicated technical features. Therefore, a feature limited by "first" or "second" may explicitly or implicitly include one or more features. In the descriptions of embodiments, unless otherwise specified, "a plurality of" means two or more.

In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that in this application, "at least one" means one or more. "A plurality of" means two or more than two. "At least two" means two, three, or more than three. "And/or" describe an association relationship between associated objects, and indicates that three relationships may exist. For example, "A and/or B" may represent three cases: Only A exists, only B exists, and both A and B exist, where A and B may be singular or plural. The character "/" usually indicates an "or" relationship between the associated objects. "At least one of the following items" or a similar expression thereof means any combination of these items, including any combination of singular items or plural items. For example, at least one of a, b, or c may indicate a, b, c, a and b, a and c, b and c, or a, b, and c, where a, b, and c may be singular or plural. Both "when ..." and "if" mean that corresponding processing is performed in an objective case, are not intended to limit time, do not require a determining action during implementation, and do not mean that there is another limitation.

In embodiments of this application, the word such as "example" or "for example" is intended to indicate giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In this application, "sending information to ... (a terminal device)" may be understood as that a destination of the information is the terminal device, and may include directly or indirectly sending the information to the terminal device. "Receiving information from ... (a terminal device)" may be understood as that a source of the information is the terminal device, and may include directly or indirectly receiving the information from the terminal device. The information may undergo necessary processing, for example, a format change, between the source for sending the information and the destination. However, the destination may understand valid information from the source.

The foregoing descriptions of implementations allow a person skilled in the art to understand that, for the purpose of convenient and brief description, division into the foregoing functional modules is merely used as an example for illustration. During actual application, the foregoing functions may be allocated to different functional modules for implementation as required. In other words, an internal structure of the apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such understanding, the technical solutions in embodiments of this application essentially or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, such as a USB flash drive, a removable hard disk, a ROM, a RAM, a magnetic disk, or an optical disc.

## Claims

1. A sensing measurement method, comprising:
determining M frequencies, wherein a sum of phases corresponding to a plurality of frequencies among the M frequencies modulo 2π equals 0;
sending frequency information of the M frequencies to a receiver device; and
sending a sensing signal to a target object through the M frequencies.

2. The method according to claim 1, wherein
the M frequencies comprise at least one group of frequencies, each group of frequencies among the at least one group of frequencies comprises a plurality of frequencies, and a sum of phases corresponding to the frequencies in each group modulo 2π equals 0.

3. The method according to claim 1 or 2, wherein
the M frequencies comprise K groups of frequencies, each group of frequencies among the K groups of frequencies comprises 2ⁿ⁺¹ frequencies, a sum of phases corresponding to the 2ⁿ⁺¹ frequencies modulo 2π equals 0, K is greater than or equal to 1, and n is an integer.

4. The method according to any one of claims 1 to 3, wherein
a phase difference between phases corresponding to two adjacent frequencies in the plurality of frequencies arranged in ascending order among the M frequencies is π/2ⁿ, and n is an integer.

5. The method according to any one of claims 1 to 4, wherein
the M frequencies comprise at least one group of frequencies, each group of frequencies among the at least one group of frequencies comprises a plurality of frequencies, a phase difference between phases corresponding to two adjacent frequencies in each group of frequencies arranged in ascending order is π/2ⁿ, and n is an integer.

6. The method according to any one of claims 1 to 5, wherein
the M frequencies comprise K groups of frequencies, each group of frequencies among the K groups of frequencies comprises 2ⁿ⁺¹ frequencies, a phase difference between phases corresponding to two adjacent frequencies among the 2ⁿ⁺¹ frequencies arranged in ascending order is π/2ⁿ, and n is an integer.

7. The method according to any one of claims 1 to 6, wherein
the phase corresponding to the frequency is an integer multiple of 2πΔfΔτ, Δf represents an integer multiple of a subcarrier spacing, and Δτ is determined based on a highest frequency and a lowest frequency among the M frequencies.

8. The method according to any one of claims 1 to 7, wherein
the frequency and the phase corresponding to the frequency satisfy the following formula: *f* = (*θ* - *ϕ*)/2*π*Δ*τ*, wherein *f* represents the frequency, *θ* represents the phase corresponding to the frequency, *ϕ* is determined according to an injective function, and Δτ is determined based on the highest frequency and the lowest frequency among the M frequencies.

9. The method according to any one of claims 1 to 8, wherein
the M frequencies comprise M/2 groups of frequencies, each group of frequencies comprises two frequencies, and a phase difference between phases corresponding to two adjacent frequencies in the two frequencies is π.

10. The method according to any one of claims 1 to 8, wherein
the M frequencies comprise M/4 groups of frequencies, each group of frequencies comprises four frequencies, and a phase difference between phases corresponding to two adjacent frequencies among the four frequencies arranged in ascending order is π/2.

11. The method according to any one of claims 1 to 8, wherein
the M frequencies comprise M/8 groups of frequencies, each group of frequencies comprises eight frequencies, and a phase difference between phases corresponding to two adjacent frequencies among the eight frequencies arranged in ascending order is π/4.

12. The method according to any one of claims 1 to 11, wherein
the frequency information of the frequency comprises a frequency value of the frequency; or
the frequency information of the frequency comprises an index value of the frequency.

13. A sensing measurement method, comprising:
receiving frequency information of M frequencies from a transmitter device, wherein a sum of phases corresponding to a plurality of frequencies among the M frequencies modulo 2π equals 0;
receiving a sensing signal through the M frequencies; and
performing sensing measurement based on the sensing signal, to obtain a sensing measurement result.

14. The method according to claim 13, wherein
the M frequencies comprise at least one group of frequencies, each group of frequencies among the at least one group of frequencies comprises a plurality of frequencies, and a sum of phases corresponding to the frequencies in each group modulo 2π equals 0.

15. The method according to claim 13 or 14, wherein
the M frequencies comprise K groups of frequencies, each group of frequencies among the K groups of frequencies comprises 2ⁿ⁺¹ frequencies, a sum of phases corresponding to the 2ⁿ⁺¹ frequencies modulo 2π equals 0, K is greater than or equal to 1, and n is an integer.

16. The method according to any one of claims 13 to 15, wherein
a phase difference between phases corresponding to two adjacent frequencies in the plurality of frequencies arranged in ascending order among the M frequencies is π/2ⁿ, and n is an integer.

17. The method according to any one of claims 13 to 16, wherein
the M frequencies comprise at least one group of frequencies, each group of frequencies among the at least one group of frequencies comprises a plurality of frequencies, a phase difference between phases corresponding to two adjacent frequencies in each group of frequencies arranged in ascending order is π/2ⁿ, and n is an integer.

18. The method according to any one of claims 13 to 17, wherein
the M frequencies comprise K groups of frequencies, each group of frequencies among the K groups of frequencies comprises 2ⁿ⁺¹ frequencies, a phase difference between phases corresponding to two adjacent frequencies among the 2ⁿ⁺¹ frequencies arranged in ascending order is π/2ⁿ, and n is an integer.

19. The method according to any one of claims 13 to 18, wherein
the phase corresponding to the frequency is an integer multiple of 2πΔfΔτ, Δf represents an integer multiple of a subcarrier spacing, and Δτ is determined based on a highest frequency and a lowest frequency among the M frequencies.

20. The method according to any one of claims 13 to 19, wherein
the frequency and the phase corresponding to the frequency satisfy the following formula: *f* = (*θ* - *ϕ*)/2*π*Δ*τ*, wherein *f* represents the frequency, *θ* represents the phase corresponding to the frequency, *ϕ* is determined according to an injective function, and Δτ is determined based on the highest frequency and the lowest frequency among the M frequencies.

21. The method according to any one of claims 13 to 20, wherein
the M frequencies comprise M/2 groups of frequencies, each group of frequencies comprises two frequencies, and a phase difference between phases corresponding to two adjacent frequencies in the two frequencies is π.

22. The method according to any one of claims 13 to 20, wherein
the M frequencies comprise M/4 groups of frequencies, each group of frequencies comprises four frequencies, and a phase difference between phases corresponding to two adjacent frequencies among the four frequencies arranged in ascending order is π/2.

23. The method according to any one of claims 13 to 20, wherein
the M frequencies comprise M/8 groups of frequencies, each group of frequencies comprises eight frequencies, and a phase difference between phases corresponding to two adjacent frequencies among the eight frequencies arranged in ascending order is π/4.

24. The method according to any one of claims 13 to 23, wherein
the frequency information of the frequency comprises a frequency value of the frequency; or
the frequency information of the frequency comprises an index value of the frequency.

25. A communication apparatus, comprising:
a processing module, configured to determine M frequencies, wherein a sum of phases corresponding to a plurality of frequencies among the M frequencies modulo 2π equals 0; and
a transceiver module, configured to send frequency information of the M frequencies to a receiver device; and
the transceiver module is further configured to send a sensing signal to a target object through the M frequencies.

26. The apparatus according to claim 25, wherein
the M frequencies comprise at least one group of frequencies, each group of frequencies among the at least one group of frequencies comprises a plurality of frequencies, and a sum of phases corresponding to the frequencies in each group modulo 2π equals 0.

27. The apparatus according to claim 25 or 26, wherein
the M frequencies comprise K groups of frequencies, each group of frequencies among the K groups of frequencies comprises 2ⁿ⁺¹ frequencies, a sum of phases corresponding to the 2ⁿ⁺¹ frequencies modulo 2π equals 0, K is greater than or equal to 1, and n is an integer.

28. The apparatus according to any one of claims 25 to 27, wherein
a phase difference between phases corresponding to two adjacent frequencies in the plurality of frequencies arranged in ascending order among the M frequencies is π/2ⁿ, and n is an integer.

29. The apparatus according to any one of claims 25 to 28, wherein
the M frequencies comprise at least one group of frequencies, each group of frequencies among the at least one group of frequencies comprises a plurality of frequencies, a phase difference between phases corresponding to two adjacent frequencies in each group of frequencies arranged in ascending order is π/2ⁿ, and n is an integer.

30. The apparatus according to any one of claims 25 to 29, wherein
the M frequencies comprise K groups of frequencies, each group of frequencies among the K groups of frequencies comprises 2ⁿ⁺¹ frequencies, a phase difference between phases corresponding to two adjacent frequencies among the 2ⁿ⁺¹ frequencies arranged in ascending order is π/2ⁿ, and n is an integer.

31. The apparatus according to any one of claims 25 to 30, wherein
the phase corresponding to the frequency is an integer multiple of 2πΔfΔτ, Δf represents an integer multiple of a subcarrier spacing, and Δτ is determined based on a highest frequency and a lowest frequency among the M frequencies.

32. The apparatus according to any one of claims 25 to 31, wherein
the frequency and the phase corresponding to the frequency satisfy the following formula: *f* = (*θ* - *ϕ*)/2*π*Δ*τ*, wherein *f* represents the frequency, *θ* represents the phase corresponding to the frequency, *ϕ* is determined according to an injective function, and Δτ is determined based on the highest frequency and the lowest frequency among the M frequencies.

33. The apparatus according to any one of claims 25 to 32, wherein
the M frequencies comprise M/2 groups of frequencies, each group of frequencies comprises two frequencies, and a phase difference between phases corresponding to two adjacent frequencies in the two frequencies is π.

34. The apparatus according to any one of claims 25 to 32, wherein
the M frequencies comprise M/4 groups of frequencies, each group of frequencies comprises four frequencies, and a phase difference between phases corresponding to two adjacent frequencies among the four frequencies arranged in ascending order is π/2.

35. The apparatus according to any one of claims 25 to 32, wherein
the M frequencies comprise M/8 groups of frequencies, each group of frequencies comprises eight frequencies, and a phase difference between phases corresponding to two adjacent frequencies among the eight frequencies arranged in ascending order is π/4.

36. The apparatus according to any one of claims 25 to 35, wherein
the frequency information of the frequency comprises a frequency value of the frequency; or
the frequency information of the frequency comprises an index value of the frequency.

37. A communication apparatus, comprising:
a transceiver module, configured to receive frequency information of M frequencies from a transmitter device, wherein a sum of phases corresponding to a plurality of frequencies among the M frequencies modulo 2π equals 0; and
the transceiver module is further configured to receive a sensing signal through the M frequencies; and
a processing module, configured to perform sensing measurement based on the sensing signal, to obtain a sensing measurement result.

38. The apparatus according to claim 37, wherein
the M frequencies comprise at least one group of frequencies, each group of frequencies among the at least one group of frequencies comprises a plurality of frequencies, and a sum of phases corresponding to the frequencies in each group modulo 2π equals 0.

39. The apparatus according to claim 37 or 38, wherein
the M frequencies comprise K groups of frequencies, each group of frequencies among the K groups of frequencies comprises 2ⁿ⁺¹ frequencies, a sum of phases corresponding to the 2ⁿ⁺¹ frequencies modulo 2π equals 0, K is greater than or equal to 1, and n is an integer.

40. The apparatus according to any one of claims 37 to 39, wherein
a phase difference between phases corresponding to two adjacent frequencies in the plurality of frequencies arranged in ascending order among the M frequencies is π/2ⁿ, and n is an integer.

41. The apparatus according to any one of claims 37 to 40, wherein
the M frequencies comprise at least one group of frequencies, each group of frequencies among the at least one group of frequencies comprises a plurality of frequencies, a phase difference between phases corresponding to two adjacent frequencies in each group of frequencies arranged in ascending order is π/2ⁿ, and n is an integer.

42. The apparatus according to any one of claims 37 to 41, wherein
the M frequencies comprise K groups of frequencies, each group of frequencies among the K groups of frequencies comprises 2ⁿ⁺¹ frequencies, a phase difference between phases corresponding to two adjacent frequencies among the 2ⁿ⁺¹ frequencies arranged in ascending order is π/2ⁿ, and n is an integer.

43. The apparatus according to any one of claims 37 to 42, wherein
the phase corresponding to the frequency is an integer multiple of 2πΔfΔτ, Δf represents an integer multiple of a subcarrier spacing, and Δτ is determined based on a highest frequency and a lowest frequency among the M frequencies.

44. The apparatus according to any one of claims 37 to 43, wherein
the frequency and the phase corresponding to the frequency satisfy the following formula: *f* = (*θ* - *ϕ*)/2*π*Δ*τ*, wherein *f* represents the frequency, *θ* represents the phase corresponding to the frequency, *ϕ* is determined according to an injective function, and Δτ is determined based on the highest frequency and the lowest frequency among the M frequencies.

45. The apparatus according to any one of claims 37 to 44, wherein
the M frequencies comprise M/2 groups of frequencies, each group of frequencies comprises two frequencies, and a phase difference between phases corresponding to two adjacent frequencies in the two frequencies is π.

46. The apparatus according to any one of claims 37 to 44, wherein
the M frequencies comprise M/4 groups of frequencies, each group of frequencies comprises four frequencies, and a phase difference between phases corresponding to two adjacent frequencies among the four frequencies arranged in ascending order is π/2.

47. The apparatus according to any one of claims 37 to 44, wherein
the M frequencies comprise M/8 groups of frequencies, each group of frequencies comprises eight frequencies, and a phase difference between phases corresponding to two adjacent frequencies among the eight frequencies arranged in ascending order is π/4.

48. The apparatus according to any one of claims 37 to 47, wherein
the frequency information of the frequency comprises a frequency value of the frequency; or
the frequency information of the frequency comprises an index value of the frequency.

49. A communication apparatus, wherein the communication apparatus comprises a processor, and the processor is configured to run a computer program or instructions, to perform the sensing measurement method according to any one of claims 1 to 12, or perform the sensing measurement method according to any one of claims 13 to 24.

50. The communication apparatus according to claim 49, wherein
the communication apparatus further comprises a memory, and the memory is configured to store the computer program or the instructions.

51. A communication apparatus, wherein the communication apparatus comprises an interface circuit and a logic circuit, the interface circuit is configured to input and/or output information, and the logic circuit is configured to: perform the sensing measurement method according to any one of claims 1 to 12, or perform the sensing measurement method according to any one of claims 13 to 24, and perform processing based on the information and/or generate the information.

52. A computer-readable storage medium, wherein the computer-readable storage medium stores computer instructions or a program, and when the computer instructions or the program is run on a computer, the sensing measurement method according to any one of claims 1 to 12 is performed, or the sensing measurement method according to any one of claims 13 to 24 is performed.

53. A computer program product, wherein the computer program product comprises computer instructions, and when a part of or all of the computer instructions are run on a computer, the sensing measurement method according to any one of claims 1 to 12 or the sensing measurement method according to any one of claims 13 to 24 is performed.
